(19) Europäisches Patentamt
European Patent Office
Office européen des brevets

(11) **EP 3 202 596 B1**

(12) **EUROPEAN PATENT SPECIFICATION**

(45) Date of publication and mention
of the grant of the patent:
**10.10.2018 Bulletin 2018/41**

(51) Int Cl.:
**B60C 17/00** *(2006.01)*          **B60C 3/04** *(2006.01)*
**B60C 15/06** *(2006.01)*          **B60C 9/28** *(2006.01)*
**B60C 11/03** *(2006.01)*

(21) Application number: **15847158.1**

(22) Date of filing: **21.08.2015**

(86) International application number:
**PCT/JP2015/004209**

(87) International publication number:
**WO 2016/051651 (07.04.2016 Gazette 2016/14)**

(54) **RUN-FLAT TIRE**

NOTLAUFREIFEN

PNEU À AFFAISSEMENT LIMITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.10.2014 JP 2014205250**

(43) Date of publication of application:
**09.08.2017 Bulletin 2017/32**

(73) Proprietor: **Bridgestone Corporation
Tokyo 104-8340 (JP)**

(72) Inventors:
• **HATANAKA, Shintaro
Tokyo 104-8340 (JP)**
• **KUWAYAMA, Isao
Tokyo 104-8340 (JP)**

(74) Representative: **Oxley, Robin John George
Marks & Clerk LLP
90 Long Acre
London WC2E 9RA (GB)**

(56) References cited:
**EP-A1- 2 781 372          WO-A1-2015/182153
JP-A- 2005 119 384          JP-A- 2005 119 384
JP-A- 2005 247 007          JP-A- 2013 063 765
JP-A- 2013 063 765          JP-A- 2013 224 054
US-A- 5 988 247**

EP 3 202 596 B1

**Description**

TECHNICAL FIELD

This disclosure relates to a run-flat tire.

BACKGROUND

Conventionally, as disclosed in PTL1, suggested is a technique for improving fuel efficiency by using a narrow-width, large-diameter tire, which is desired as an effective technique for use as, e.g., a tire for electric automobiles.
PTL1: WO2012/176476A1. Attention is also drawn to the disclosures of EP2, 781, 372 and WO2015/182153, which show a tire according to the preamble of claim 1.

SUMMARY

(Technical Problem)

In the aforementioned technique, run-flat travelling performances are desired as well. However, as for a run-flat tire having on a sidewall portion a side reinforcing rubber with a crescent-like cross section, considering that high fuel efficiency is deteriorated due to weight increase caused by the side reinforcing rubber, it is desired that the aforementioned narrow-width, large-diameter tire achieves both high fuel efficiency and run-flat durability.
This disclosure is to provide a run-flat tire which improves the fuel efficiency, and simultaneously ensures the run-flat durability.

(Solution to Problem)

A first aspect of the invention is as claimed in claim 1.
The run-flat tire of this disclosure includes a tread portion, a pair of sidewall portions continuous on both sides of the tread portion, bead portions continuous on each sidewall portion, side reinforcing rubbers with crescent-like cross section disposed on the sidewall portions, and a carcass formed of plies of radially arranged cords extending toroidally between the pair of bead portions, wherein: when the tire is mounted to a rim, and an internal pressure of 250 kPa or more is applied to the tire, in a case where a sectional width SW of the tire is less than 165 mm, a ratio of the sectional width SW to an outer diameter OD of the tire, SW/OD, is 0.26 or less; and in a case where the sectional width SW of the tire is 165 mm or more, the sectional width SW and the outer diameter OD of the tire satisfy a relation expression $OD \geq 2.135 \times SW + 282.3$ (mm); a tire radial outer side of the carcass further includes a belt formed of one or more belt layers; the tread portion has one or more circumferential grooves continuously extending in a tire circumferential direction; and the relation expression of $0.5 \leq WG/WB \leq 0.8$ is satisfied, where WB represents a half width in the tire width direction of a belt layer maximum in width in the tire width direction of the one or more belt layers in a tire widthwise cross section in a reference state where the tire is mounted to a rim and filled with a predetermined internal pressure with no load applied thereon, and WG represents a tire widthwise distance from a tire widthwise end of the belt layer maximum in width in the tire width direction to a tire widthwise center position of a circumferential groove in the tire widthwise outermost side of the one or more circumferential grooves.
Here, the "rim" is a valid industrial standard for the region in which the tire is produced or used, and refers to a standard rim of an applicable size (the "Measuring Rim" in the STANDARDS MANUAL of ETRTO, and the "Design Rim" in the "YEAR BOOK" of TRA) which is described or will be described in the "JATMA Year Book" of JATMA (The Japan Automobile Tyre Manufacturers Association) in Japan, the "ETRTO STANDARD MANUAL" of ETRTO (the European Tyre and Rim Technical Organisation) in Europe, or the "TRA YEAR BOOK" of TRA (the Tire and Rim Association,Inc.) in the United States of America, etc. (namely, the aforementioned "rim" is inclusive of current sizes and sizes which are possibly included in the aforementioned industrial standards. Examples for "size which will be described" are the sizes described as "FUTURE DEVELOPMENTS" in ETRTO 2013 edition.). As for sizes not described in the aforementioned industrial standards, the "rim" refers to rims having a width corresponding to the bead width of the tire.
Moreover, the "predetermined internal pressure" refers to a state that the tire is applied an air pressure of a single wheel corresponding to a maximum load capability (maximum air pressure) at applicable size and ply rating, as described by JATMA, etc. As for sizes not described in the aforementioned industrial standards, the "predetermined internal pressure" refers to an air pressure corresponding to a maximum load capability determined depending on the vehicle to which the tire is mounted (maximum air pressure). Further, the "maximum load" mentioned below refers to a load corresponding to the aforementioned maximum load capability.
The description "continuously extending in a tire circumferential direction" is inclusive of the case of extending in a straight line shape continuously in the tire circumferential direction, the case of extending in a zigzag shape, and the case of extending in a bended shape.

Further, "the tire widthwise center position of the circumferential groove" refers to the tire widthwise position of the midpoint of a segment connecting the circumferential groove and the tread surface on the tire widthwise cross section.

In the case where one or both of the "tire radial outermost point of the bead filler" and the "tire radial outermost point of the bead core" mentioned below exist in a plurality, a segment is connected in a manner such that H2 is maximum.

The "maximum thickness measured in a direction perpendicular to the carcass" mentioned below refers to, in the case where the carcass has a folded-up structure formed of a carcass main body and a carcass folded-up portion, a maximum thickness measured in a direction perpendicular to the carcass main body.

(Advantageous Effect)

According to this disclosure, it is possible to provide a run-flat tire which improves the fuel efficiency, and simultaneously ensures the run-flat durability.

BRIEF DESCRIPTION OF THE DRAWINGS

FIG. 1 illustrates a tire widthwise cross-sectional view of a run-flat tire according to one embodiment of this disclosure;

FIG. 2 illustrates a developed view showing a tread pattern of a run-flat tire according to one embodiment of this disclosure;

FIG. 3 illustrates a developed view showing a tread pattern of a run-flat tire according to another embodiment of this disclosure;

FIG. 4 illustrates a tire widthwise partial cross-sectional view of a run-flat tire according to one embodiment of this disclosure; and

FIG. 5(a)(b) illustrates a contact state in run-flat traveling.

DETAILED DESCRIPTION

Hereinafter, an embodiment of this disclosure will be described with reference to the drawings.

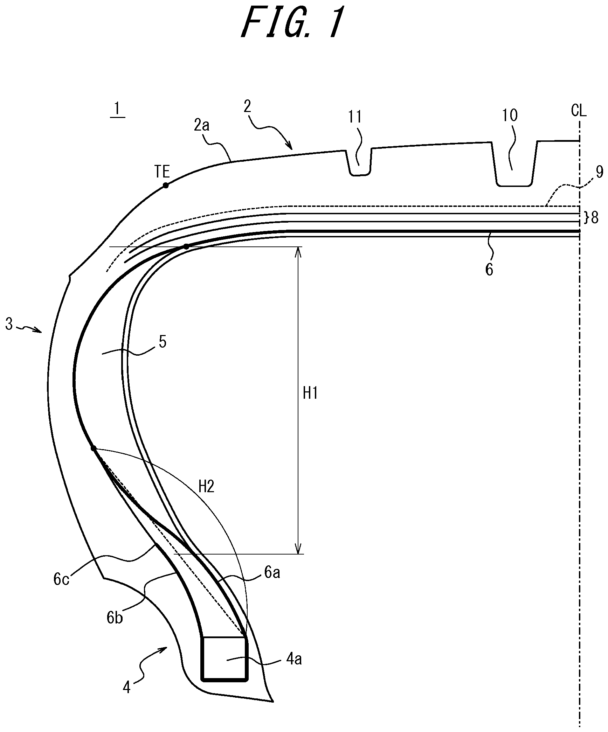

FIG. 1 illustrates a tire widthwise cross-sectional view of a run-flat tire (hereinafter referred to as merely "tire") according to one embodiment of this disclosure. Illustrated in FIG. 1 is a tire widthwise cross section of the tire in a reference state as being mounted to a rim and filled with a predetermined internal pressure with no load applied thereon.

Here, when this tire 1 is mounted to a rim, and an internal pressure of 250 kPa or more is applied to the tire 1, in a case where a sectional width SW of the tire is less than 165 mm, a ratio of the sectional width SW (mm) to an outer diameter OD (mm) of the tire 1 , SW/OD, is 0.26 or less; and in a case where the sectional width SW of the tire is 165 mm or more, the sectional width SW (mm) and the outer diameter OD (mm) of the tire 1 satisfy a relation expression $OD \geq 2.135 \times SW + 282.3$ (mm).

The run-flat tire of this disclosure is not limited, and may be exemplified as those of tire size 145/60R19, 145/60R18, 145/60R17, 155/70R19, 155/55R19, 155/55R18, 165/60R19, 165/55R18, 175/60R19, 175/55R18, 175/55R20, 175/60R18, 185/60R20, 185/55R20, 185/60R19, 185/55R19, 195/50R20, 195/55R20, 205/50R21, etc.

As illustrated in FIG. 1, the tire 1 includes a tread portion 2, a pair of (one illustrated) sidewall portions 3 continuous on both sides (one side illustrated) of the tread portion 2, bead portions 4 continuous on each (one illustrated) sidewall portion 3, side reinforcing rubbers 5 with crescent-like cross section disposed on the sidewall portions 3, a carcass 6 formed of plies of radially arranged cords extending toroidally between the pair of (one illustrated) bead portions 4.

As illustrated in FIG. 1, the bead portions 4 have bead cores 4a. In this disclosure, the bead cores 4a may have various shapes such as circular cross section, polygonal cross section, etc.

Moreover, in the present embodiment, on tire radial outer sides of the bead cores 4a, bead fillers 7 with an approximately triangular cross section are arranged. On the other hand, this disclosure may have a structure without bead fillers 7.

Further, the bead portions 4 may have reinforcement members such as reinforcing rubber layers, reinforcing cord layers and the like disposed thereon. These reinforcement members may be disposed on various positions on the bead portions 4; for example, the reinforcement members may be disposed on tire widthwise outer sides and/or inner sides of the bead fillers 7.

In the present embodiment, the carcass 6 has a carcass main body 6a and a carcass folded-up portion 6b, the carcass main body 6a fixed to the pair of bead cores 4a, the carcass folded-up portion 6b extending from the carcass main body 6a and formed by folding up a circumference of the bead cores 4a from a tire widthwise inner side to a tire widthwise outer side.

On the other hand, in this disclosure, the carcass 6 is not limited to folded-up structure, but may be, for example, a structure such that the bead cores 4a are separated into a plurality, and the carcass 6 is surrounded by the plurality of separated bead core members.

In this disclosure, the carcass line may be of various shapes, for example, a carcass maximum width position may be set either close to the bead portions 4 side or close to the tread portion 2 side.

The number of cords of the carcass may be in a range of 20 to 60 per 50 mm, without being limited thereto.

In the present embodiment, a folded-up end 6c of the folded-up portion 6b of the carcass 6 is located on a tire radial side inner than a tire radial outer end of the bead filler 7, while it is possible to locate the same on a tire radial outer end of the bead filler 7 or a tire radial side outer than a tire maximum width position.

Moreover, in the case where the carcass 6 is formed of a plurality of carcass plies, the positions of the folded-up ends 6c of each ply may be different from each other.

In the present embodiment, the carcass 6 extends continuously between the bead cores 4a completely, while in this disclosure, the carcass 6 is not limited to the aforementioned example, and may, for example, extend from the bead core 4a to a tire widthwise outer region of the tread portion 2, to form a pair of divided carcasses of which a tire widthwise central region is extracted.

Here, as illustrated in FIG. 1, this tire 1 further has a belt 8 formed of belt layers (two in the illustrated example) on a tire radial outer side of a crown portion of the carcass 6, and reinforcing belt layers 9 (one in the illustrated example) arranged on a tire radial outer side of the belt 8.

Here, in the illustrated example, the belt 8 is an inclined belt, in which belt cords cross each other between the layers. The belt cords may be, for example, steel cords, organic fiber cords, etc., without being limited thereto. Moreover, the belt cords of each belt layer may extend at an angle of 20 to 75° with respect to the tire circumferential direction.

Moreover, the belt reinforcement layers 9 may use spiral cords coiling in a spiral shape approximately in the tire circumferential direction, high rigidity cords (cords having a Young's modulus of 50 MPa or more determined according to JIS L1017 8.8 (2002) when tested according to JIS L1017 8.5 a) (2002)), low rigidity cords (cords having a Young's modulus of less than 50 MPa at the same conditions), high elongation cords, high heat shrinkage cords (cords having a heat shrinkage of 1% or more with a load of 50 g under 170°C), etc. Further, the cords of the belt reinforcement layers 9 may be monofilament cords, cords obtained by twisting a plurality of filaments, or even cords obtained by twisting filaments of different materials. In the illustrated example, the tire widthwise width of the belt layer on the tire radial inner side is longer than the tire widthwise width of the belt layer on the tire radial outer side, while the tire widthwise width of the belt layer on the tire radial inner side may be shorter than the tire widthwise width of the belt layer on the tire radial outer side as well.

The number of cords of the belt reinforcement layers 9 may be in a range of 20 to 60 per 50 mm, without being limited thereto.

Moreover, the cords of the belt reinforcement layers 9 may be distributed with the rigidity, the material, the number of layers, the number of cords, etc. varying in the tire width direction. For example, the number of layers may be increased in merely the tire widthwise end, or in merely the tire widthwise central portion.

Moreover, the tire widthwise width of the belt reinforcement layers 9 may be either larger or smaller than the belt 8.

Further, in the present embodiment, the belt reinforcement layers 9 are arranged on the tire radial outer side of the belt 8, while in this disclosure, the belt reinforcement layers 9 may be arranged on the tire radial inner side of the belt 8 as well.

Moreover, a belt layer having a largest tire widthwise width among one or more belt layers preferably has a tire widthwise width of 90% to 120%, more preferably 100% to 110%, of a tread width. Here, the "tread width" refers to a tire widthwise width of the contact patch which contacts the road surface when filled with the aforementioned predetermined internal pressure with the aforementioned maximum load applied thereon.

Here, in this disclosure, the tread portion 2 may be formed of one rubber layer, or formed by laminating in the tire radial direction a plurality of different rubber layers. In the case of using a plurality of different rubber layers, loss tangent, modulus, hardness, glass-transition temperature, material, etc. thereof may be different. Moreover, the thickness of the plurality of rubber layers may vary in the tread width direction, and merely groove bottoms of circumferential grooves may be formed of rubber layers of types different from its surroundings.

Moreover, in this disclosure, the tread portion 2 may be formed by arranging a plurality of different rubber layers in the tire width direction, and in this case, loss tangent, modulus, hardness, glass-transition temperature, material, etc. may vary among the layers. Moreover, it is possible to vary the ratio of tire widthwise width of the plurality of rubber layers in the tread radial direction, or to use rubber layers of types different from its surroundings in merely a part of the region, such as merely groove bottoms of circumferential grooves, merely the vicinity of tread edges, merely tire widthwise outermost land portions, merely a tire widthwise central land portion, etc. Here, the "tread edge" refers to a tire widthwise outermost end of a portion contacting with the road surface when filled with the aforementioned predetermined internal pressure with the maximum load applied thereon.

In this disclosure, in a tire widthwise cross section in the aforementioned reference state, a ratio LCR/TW is preferably 0.06 or less and more preferably 0.02 or more and 0.05 or less, where LCR is a height difference, i.e., a tire radial distance between a straight line m1 and a straight line m2, m1 is a straight line parallel to the tire width direction across a point on the tread surface in the tire equatorial plain CL (a point on a virtual outer contour line of the tread in the case where the portion is a groove), m2 is a straight line parallel to the tire width direction across the tread edge TE, and TW is a tread width. This is because that the durability and the wear resistance of the tire can be improved.

Further, in this disclosure, the thickness of the sidewall portions 3 is preferably thin. Specifically, in the aforementioned reference state, a tire widthwise cross section area S1 of the bead fillers 7 is preferably 1 to 4 times to a tire widthwise area S2 of the bead cores 4a. By setting S1 to 4 times or less to S2, the riding comfort can be ensured, while on the other hand, by setting S1 to one time or more to S2, the steering stability can be ensured.

In the tire of this disclosure, the loss tangent tan $\delta$ of the side reinforcing rubbers 5 is preferably 0.05 to 0.15. By setting the loss tangent tan $\delta$ to 0.05 or more, the damping property can be improved, while on the other hand, by setting the loss tangent tan $\delta$ to 0.15 or less, the heat buildup in the side reinforcing rubbers 5 can be suppressed. Further, in the tire of this disclosure, the 50% stretch modulus of the side reinforcing rubbers 5 is 1.5 to 6.0 MPa. By setting the 50% stretch modulus of the side reinforcing rubbers 5 to 1.5 MPa or more, the steering stability can be further ensured, while on the other hand, by setting the 50% stretch modulus of the side reinforcing rubbers 5 to 6.0 MPa or less, the comfort and riding comfort can be further ensure. Further, the aforementioned loss tangent tan $\delta$ and 50% stretch modulus refer to values measured with respect to a specimen 2 mm thick, 5 mm wide and 20 mm long, at the conditions of an initial strain of 1%, a dynamic strain frequency of 50 Hz, and a temperature of 60°C.

Moreover, as illustrated in FIG. 1, the side reinforcing rubbers 5 are preferably arranged on the tire widthwise inner side of the carcass 6.

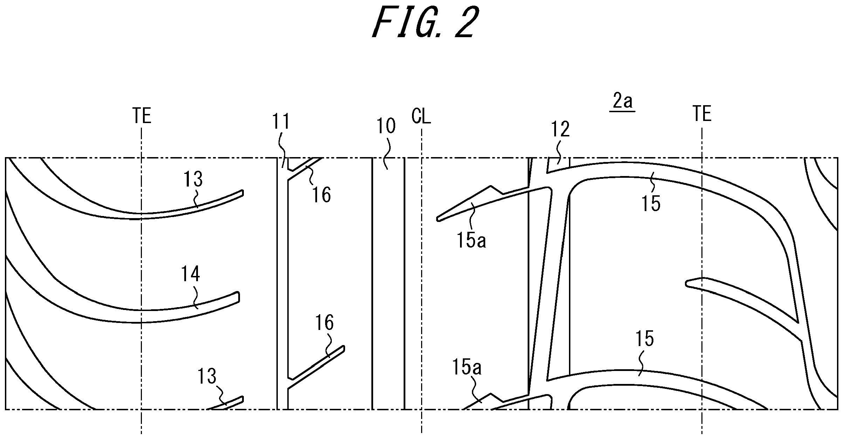

Next, FIG. 2 illustrates a developed view of a tread pattern of a tire according to one embodiment of this disclosure. As illustrated in FIG. 2, the tire of the present embodiment has three circumferential grooves 10, 11, 12 on the tread surface 2a. In the illustrated example, two circumferential grooves 10, 11 are formed on one tire widthwise half portion partitioned by the tire equatorial plain CL, and one circumferential groove 12 is formed on the other tire widthwise half portion. For example, the aforementioned one tire widthwise half portion may be the vehicle-installed inner side. In the present embodiment, the circumferential groove 10, 11, 12 are 2 mm wide or more. Further, in the embodiment as illustrated in FIG. 2, it is preferable that one tread widthwise half portion partitioned by the tire equatorial plain CL on which the circumferential grooves 10, 11 are located is the vehicle-installed inner side, and the other tread widthwise half portion partitioned by the tire equatorial plain CL on which the circumferential groove 12 is located is the vehicle-installed outer side.

As illustrated in FIG. 2, the tire of this disclosure has on the tread surface 2a a plurality of widthwise grooves 13, 14, 15 extending in the tire width direction. Moreover, a narrow groove 16, which connects to the circumferential groove 11 and ends within the land portion, is formed on the circumferential groove 11. Further, the widthwise groove 15 has a widened width portion 15a, where the groove width is wider than the groove width of the portion connecting to the circumferential groove 12.

In the present embodiment, a negative ratio (a ratio of the groove area to the area of the entire tread surface) is preferably 25% or less. This is because that the steering stability can be improved. For the same reason, the negative ratio is more preferably 15% or less. Further, in this disclosure, OD/RD is preferably 1.4 or less, where RD is a tire inner diameter, i.e., a diameter of a part contacting the rim when the tire is incorporated with the rim. This is because that such tire has a negative ratio of 25% or less (more preferably 15% or less), and thus is capable of achieving both steering stability and high fuel efficiency at a high level. Furthermore, this disclosure may be configured such that a plurality of circumferential grooves are formed, and a circumferential groove on a tire widthwise outer side has a larger groove width. This is because that the drainage performance can be improved. Further, in this disclosure, it is preferable that the groove width of the widthwise grooves is shorter than the groove width of the circumferential grooves, the widthwise grooves are formed on circumferential land portions partitioned by a plurality of circumferential grooves, and the widthwise grooves are formed from the circumferential grooves toward the inner side of the circumferential land portions, and end within end portions within the circumferential land portions. This is because that the driving force and the braking force can be improved. Moreover, in this disclosure, it is preferable that in the circumferential grooves, narrow grooves connecting to the circumferential grooves and ending within the land portions are formed, and the angle of the narrow grooves with respect to the tire width direction is 20° or less. This is because that the side force and the riding comfort can be ensured. Further, in this disclosure, it is preferable that the widthwise grooves formed on the circumferential land portions have widened width portions, where the groove width is larger than the groove width of the portions connecting to the circumferential grooves, and becomes smaller from the widened width portions toward the end portions of the widthwise grooves. This is because that the drainage performance can be improved. Furthermore, in this disclosure, in the state where the tire is installed to a vehicle, it is preferable that the negative ratio (the ratio of the circumferential grooves to the area of the tread surface) of the vehicle-installed side inner than the tire equatorial plain CL is larger than the negative ratio (the ratio of the circumferential grooves to the area of the tread surface) of the vehicle-installed outer side. Alternatively, it is preferable that the negative ratio (the ratio of all the grooves to the area of the tread surface) of the vehicle-installed side inner than the tire equatorial plain CL is smaller than the negative ratio (the ratio of all the grooves to the area of the tread surface) of the vehicle-installed outer side. This is because that the drainage performance can be improved. In addition, in this disclosure, it is preferable that small land portions partitioned by the circumferential grooves and the widthwise grooves are arranged along the tire circumferential direction, and the small land portions have land portion surfaces corresponding to the tread surface contacting the road surface, land portion side surfaces forming groove wall surface of the widthwise grooves, and land portion inclined surfaces continuous to the land portion surfaces and the land portion side surfaces, where the land portion inclined surfaces have curved surfaces inclined from the tire widthwise outer side toward the inner side, to the tire circumferential direction and the tire width direction, and protruding toward a tire central side in the tire radial direction; the height of the land portion side surfaces, which is the height from the groove bottom surface of the widthwise grooves, decreases along with the inclination of the land portion inclined surfaces; connection portions connecting the land portion inclined surfaces and the land portion surfaces have a round shape such that bended portions protruding toward the tire radial outer side are formed, the connection portions having a round shape extending approximately in accordance with the tire circumferential direction, and adjacent connection portions being in accordance with each other in the tire circumferential direction.

In this disclosure, the (total) groove area of the widthwise grooves is preferably larger than the (total) groove area of the circumferential grooves. This is because that the drainage performance can be improved. In this case, OD/RD is preferably 1.4 or less, which achieves both high fuel efficiency and steering stability.

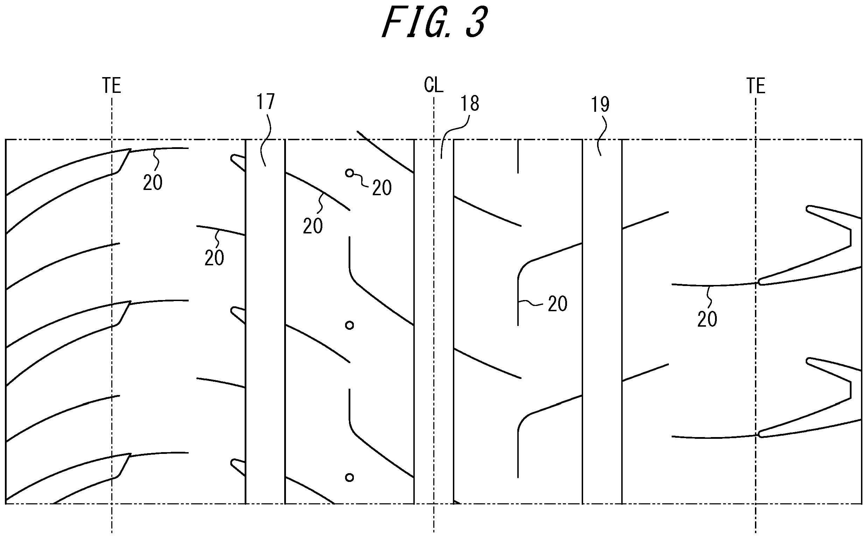

Next, FIG. 3 illustrates a developed view of a tread pattern of a tire according to another embodiment of this disclosure. The tire of the embodiment as illustrated in FIG. 3 has three circumferential grooves 17, 18, 19 on the tread surface 2a. In the illustrated example, one circumferential groove 17 is formed on one tire widthwise half portion partitioned by the tire equatorial plain CL, and two circumferential grooves 18, 19 are formed on the other tire widthwise half portion. Moreover, the tire of the embodiment as illustrated in FIG. 3 has on the tread surface 2a a plurality of supplemental grooves 20 with a groove width of 2 mm or less. For example, the aforementioned one tire widthwise half portion may be the vehicle-installed outer side. In the present embodiment, circumferential grooves 17, 18, 19 are 5 mm wide or more. Further, in the embodiment as illustrated in FIG. 3, it is preferable that one tread widthwise half portion partitioned by the tire equatorial plain CL on which the circumferential groove 17 is located is the vehicle-installed inner side, and the other tread widthwise half portion partitioned by the tire equatorial plain CL on which the circumferential groove 19 is located is the vehicle-installed outer side.

In the present embodiment, as for the grooves, the tread surface preferably has merely at least one circumferential groove extending in the tire circumferential direction, or has merely a circumferential groove and at least one supplemental groove other than the circumferential groove, the supplemental groove having a groove width of a tread widthwise region of 80% of the tread width of the tread surface centering on the tire equatorial plain is 2 mm or less, where the negative ratio of the circumferential groove is 12% or more and 20% or less. This is because that both the drainage performance and the travelling performance on dry road surface can be achieved. Moreover, in this disclosure, the supplement groove (inclusive of hole-shaped recesses with a diameter of 2 mm or less) preferably has a total extension per unit area of the tread surface of 0.05 $(mm/mm^2)$ or less. This is because that the travelling performance on dry road surface can be further ensured. Here, the "total extension" refers to a value obtained by dividing the extending length (the length along the extension direction) of all the supplemental grooves arranged within the tread surface by the area of the tread surface. Further, in this disclosure, it is preferable that the tread surface has at least two circumferential grooves extending in the tire circumferential direction, and has a tire widthwise outermost land portion partitioned by the tread edge and a circumferential groove closest to the tread edge, and at least one tire widthwise inner land portion partitioned by the circumferential grooves on a tire widthwise inner side of the tire widthwise outermost land portion, where the tire widthwise width of the tread widthwise outermost land portion is 1/5 or more of the tread width. This is because that the steering stability can be improved. Furthermore, in this disclosure, the tread widthwise inner land portions preferably has a tire widthwise width of 23 mm or more. This is because that the steering stability can be improved. In addition, it is preferable that in at least one land portion among the tire width direction inner land portions partitioned by the circumferential grooves and a land portion partitioned by the circumferential groove closest to the tread edge and borderlines partitioning on the tread surface a tread widthwise region of 80% of the tread width centering on the tire equatorial plain, the relation expressions $1/4 \leq W1/W2 \leq 3/4$, and $\sum W1 \geq W2$ are satisfied, where W1 (mm) is a tire widthwise projected length of the supplemental groove, W2 (mm) is a tire widthwise width of at least one land portion, and $\sum W1$ (mm) is a total tread widthwise projected length within one pitch of the supplemental grooves in the tire circumferential direction. This is because that the travelling performance on dry road surface can be further improved.

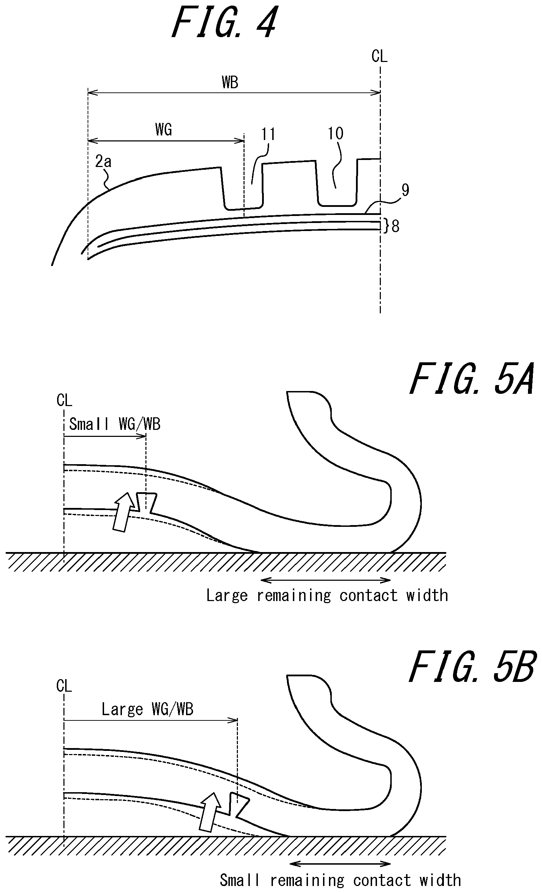

FIG. 4 illustrates a tire widthwise partial cross-sectional view of a run-flat tire according to one embodiment of this disclosure. Illustrated in FIG. 4 is a tire widthwise cross section of the tire in a reference state as being mounted to a rim and filled with a predetermined internal pressure with no load applied thereon.

Further, when WB is a tire widthwise half width of a belt layer with a maximum tire widthwise width among the one or more belt layers, and WG is a tire widthwise distance from a tire widthwise end of the belt layer with a maximum tire widthwise width to a tire widthwise central position of the tire widthwise outermost circumferential groove 11 among the one or more circumferential grooves, the tire of the present embodiment satisfies the relation expression:

$$0.5 \leq WG/WB \leq 0.8$$

Hereinafter, the effects of the run-flat tire of the present embodiment are described.

We have intensively studied the problem of improving the fuel efficiency and simultaneously ensuring the run-flat durability. As a result, it was discovered that in a narrow-width, large-diameter tire satisfying the aforementioned relation expression regarding the sectional width SW and the outer diameter OD, there is a tendency that buckling occurring in the tread portion is reduced, and deformation from the shoulder portion to the buttress portion is comparatively increased.

Then, in the run-flat tire of the present embodiment, by satisfying $0.5 \leq WG/WB$ and arranging the circumferential groove 11 close to the center, as shown in the comparison between FIG. 5(a) and FIG. 5(b), it is possible to avoid concentration of ground contact pressure of the shoulder portion due to buckling deformation during run-flat travelling, and to further ensure the run-flat durability. Moreover, by satisfying $WG/WB \leq 0.8$, it is possible to ensure the rigidity of the land portion inner in the tire width direction than the circumferential groove 11, and to ensure the cornering power during ordinary travelling. Moreover, the rolling resistance is reduced as well, and thus the fuel efficiency is improved.

As mentioned above, according to the tire of the present embodiment, it is possible to improve the fuel efficiency and to ensure the run-flat durability.

In the run-flat tire of this disclosure, when H1 (mm) is a tire radial maximum length of the side reinforcing rubbers 5, the relation expression:

$$10(mm) \leq (SW/OD) \times H1 \leq 20(mm)$$

is preferably satisfied.

This is because that by setting $(SW/OD) \times H1$ to 10 (mm) or more, it is possible to ensure the volume of the side reinforcing rubbers 5, and to thereby further ensure the run-flat durability, and on the other hand, by setting $(SW/OD) \times H1$ to 20 (mm) or less, it is possible to reduce the weight of the side reinforcing rubbers 5, and to thereby further improve the fuel efficiency.

Here, the run-flat tire of this disclosure preferably satisfies $1.8 \leq H1/H2 \leq 3.5$, where H2 is the length of a line segment connecting a tire radial outermost point of the bead filler and a tire radial outermost point of the bead core 4a in the tire widthwise cross section in the aforementioned reference state.

This is because that by setting the ratio H1/H2 to 1.8 or more, it is possible to further improve the fuel efficiency, and on the other hand, by setting the ratio H1/H2 to 3.5 or less, it is possible to further ensure the run-flat durability.

In the run-flat tire of this disclosure, a maximum thickness of the side reinforcing rubbers 5 measured in a direction perpendicular to the carcass 6 is preferably 6 mm or less. This is because that it is possible to further improve the fuel efficiency.

Further, in the run-flat tire of this disclosure, in the tire widthwise cross section in the aforementioned reference state, the folded-up end 6c of the carcass folded-up portion 6b is preferably located on a tire radial side inner than the tire maximum width position. This is because that the fuel efficiency can be further improved. For the same reason, in the tire widthwise cross section in the aforementioned reference state, a tire radial height of the folded-up end 6c of the carcass folded-up portion 6b from a tire radial innermost position direction of the carcass 6 is preferably 30 mm or less.

In the tire of this disclosure, the tread surface may have widthwise grooves extending in the tire width direction from the tire widthwise central region to the tread edge TE disposed thereon. In this case, it is possible to obtain a configuration without circumferential grooves extending in the tire circumferential direction on the tread surface.

The tire of this disclosure may be configured such that a plurality of lib-like land portions are partitioned by a plurality of circumferential grooves and tread edges TE. Here, the "lib-like land portion" refers to a land portion extending in the tire circumferential direction without being divided by grooves extending in the tire width direction, and the "lib-like land portion" is inclusive of those having widthwise grooves ending within the lib-like land portion and those divided by sipes.

In the aforementioned case, regarding a tire widthwise outermost land portion partitioned by a tire widthwise outermost circumferential groove and a tread edge TE among the plurality of lib-like land portions, for example, from the viewpoint of improving the steering stability, it is preferable to set the width in the tire width direction of the tire widthwise outermost land portion on the vehicle-installed outer side larger than the tire widthwise width of the tire widthwise outermost land portion on the vehicle-installed inner side.

In the tire of this disclosure, porous members for reducing the cavity resonance noise may be arranged on the tire internal surface. Moreover, for the same reason, electrostatic flocking may be performed to the tire internal surface.

In the tire of this disclosure, it is preferable to arrange on the tire internal surface an inner liner for maintaining the internal pressure of the tire, and the inner liner may be formed of a rubber layer mainly containing a butyle rubber, and a film layer mainly containing a resin.

In the tire of this disclosure, sealant members for avoiding air leakage when puncturing may be arranged on the tire internal surface.

The internal pressure of the tire of this disclosure is preferably 250 kPa or more, more preferably 280 kPa or more, and further more preferably 300 kPa or more.

Moreover, the tire of this disclosure preferably has an air volume of 15000 $cm^3$ or more in order to afford probable load when used on public roads.

EXAMPLES

In order to certify the effects of this disclosure, tires according to Examples 1 to 3 and Comparative Examples 1 to 3 were produced experimentally, and subjected to tests for evaluating the fuel efficiency and the run-flat of the tires. The dimensions of each tire are as shown in the following Table 1.

<Fuel efficiency>

Tests were performed via JC08 mode travelling. The evaluation results are represented by index with the evaluation result of the tire according to Comparative Example 1 as 100, where a larger index shows a better fuel efficiency.

<Run-flat durability>

The tires were travelled on a drum testing machine at a speed of 80 km/h with a load equal to 65% of the maximum load according to the LI (Load Index) applied thereon, and the distance until the tires failed and became untravelable were measured, with 160 km for 2 hours as the finishing condition. The results of index evaluation were as shown in Table 1, with the run-flat durability of the tire of Comparative Example 1 as 100. A larger value shows a better run-flat durability of the tire.

These evaluation results are shown in the following Table 1 together with the dimensions of the tires.

[Table 1]

|  | Example 1 | Example 2 | Example 3 | Comparative Example 1 | Comparative Example 2 | Comparative Example 3 |
|---|---|---|---|---|---|---|
| SW | 155 | 155 | 155 | 225 | 155 | 155 |
| OD | 653 | 653 | 653 | 634 | 653 | 653 |
| Ratio SW/OD | 0.237 | 0.237 | 0.237 | 0.355 | 0.237 | 0.237 |
| Ratio WG/WB | 0.7 | 0.5 | 0.8 | 0.7 | 0.4 | 0.9 |
| Fuel efficiency | 128 | 131 | 126 | 100 | 134 | 124 |
| Run-flat durability | 158 | 151 | 162 | 100 | 140 | 164 |

As shown in Table 1, it is understood that as compared to the tires according to Comparative Examples 1 to 3, each tire according to Examples 1 to 3 achieves both the fuel efficiency and the run-flat durability.

REFERENCE SIGNS LIST

1        run-flat tire

| | |
|---|---|
| 2 | tread portion |
| 3 | sidewall portion |
| 4 | bead portion |
| 4a | bead core |
| 5 | side reinforcing rubber |
| 6 | carcass |
| 6a | carcass main body |
| 6b | carcass folded-up portion |
| 6c | folded-up end |
| 7 | bead filler |
| 8 | belt |
| 9 | belt reinforcement layer |
| 10, 11, 12 | circumferential groove |
| 13, 14, 15 | widthwise groove |
| 15a | widened width portion |
| 16 | narrow groove |
| 17, 18, 19 | circumferential groove |
| 20 | Supplemental groove |
| CL | tire equatorial plain |
| TE | tread edge |

**Claims**

1. A tire comprising a tread portion (2), a pair of sidewall portions (3) continuous on both sides of the tread portion (2), bead portions (4) continuous on each sidewall portion (3), side reinforcing rubbers (5), and a carcass (6) formed of plies of radially arranged cords extending toroidally between the pair of bead portions (4), wherein:

   when the tire is mounted to a rim, and an internal pressure of 250 kPa or more is applied to the tire,
   in a case where a sectional width SW of the tire is less than 165 mm, a ratio of the sectional width SW to an outer diameter OD of the tire, SW/OD, is 0.26 or less; and
   in a case where the sectional width SW of the tire is 165 mm or more, the sectional width SW and the outer diameter OD of the tire satisfy a relation expression

$$OD \geq 2.135 \times SW + 282.3 \ (mm);$$

   a tire radial outer side of the carcass (6) further includes a belt (8) formed of one or more belt layers; and
   the tread portion has one or more circumferential grooves (10, 11, 12, 17, 18, 19) continuously extending in a tire circumferential direction; **characterised in that**
   the tire is a run-flat tire (1); **in that**
   the side reinforcing rubbers (5) comprise crescent-like cross section disposed on the sidewall portions; **in that**
   a relation expression

$$0.5 \leq WG/WB \leq 0.8,$$

   is satisfied, where WB represents a half width in the tire width direction of a belt layer maximum in width in the tire width direction of the one or more belt layers in a tire widthwise cross section in a reference state where the tire is mounted to a rim and filled with a predetermined internal pressure with no load applied thereon, and WG represents a tire widthwise distance from a tire widthwise end of the belt layer maximum in width in the tire width direction to a tire widthwise center position of a circumferential groove in the tire widthwise outermost side of the one or more circumferential grooves; and **in that**
   the 50% stretch modulus of the side reinforcing rubbers (5) is 1.5 to 6.0 MPa.

2. The run-flat tire according to claim 1, wherein:
   when H1 (mm) is a tire radial maximum length of the side reinforcing rubbers (5) in the tire widthwise cross section in the reference state, a relation expression:

$$10(mm) \leq (SW/OD) \times H1 \leq 20(mm)$$

is satisfied.

3. The run-flat tire according to claim 1 or 2, wherein:

the bead portions (4) have bead cores (4a), the bead cores (4a) further have bead fillers (7) on a tire radial outer side, and
a relation expression:

$$1.8 \leq H1/H2 \leq 3.5$$

is satisfied, where H2 is a length of a straight line segment connecting a tire radial outermost point of the bead filler and a tire radial outermost point of the bead core (4a) in the tire widthwise cross section in the reference state.

4. The run-flat tire according to any one of claims 1 to 3, wherein:
a maximum thickness of the side reinforcing rubbers (5) measured in a direction perpendicular to the carcass (6) is 6 mm or less.

5. The run-flat tire according to any one of claims 1 to 4, wherein:

the bead portions (4) have bead cores (4a),
the carcass (6) has a carcass main body (6a) and a carcass folded-up portion (6b), the carcass main body (6a) fixed to the pair of bead cores (4a), the carcass folded-up portion (6b) extending from the carcass main body (6a) and formed by folding up a circumference of the bead cores (4a) from a tire widthwise inner side to a tire widthwise outer side, and
a folded-up end (6c) of the folded-up portion (6b) is located on a tire radial side inner than a tire maximum width position.

6. The run-flat tire (1) according to any one of the preceding claims, wherein the bead cores (4a) are separated into a plurality, and the carcass (6) is surrounded by the plurality of separated bead core members.

7. The run-flat tire (1) according to any one of the preceding claims, the carcass (6) comprises a pair of divided carcasses of which a tire widthwise central region is extracted.

8. The run-flat tire (1) according to any one of the preceding claims, wherein the circumferential groove (10, 11, 12) are 2 mm wide or more.

9. The run-flat tire (1) according to any one of the preceding claims, wherein a plurality of circumferential grooves (10, 11, 12, 17, 18, 19) are formed, and in the circumferential grooves (10, 11, 12, 17, 18, 19) narrow grooves (16) connecting to the circumferential grooves (10, 11, 12, 17, 18, 19) and ending within the land portions are formed, and the angle of the narrow grooves with respect to the tire width direction is 20° or less.

10. The run-flat tire (1) according to any one of the preceding claims, wherein widthwise grooves (13, 14, 15) formed on circumferential land portions have widened width portions (15a), where the groove width is larger than the groove width of the portions connecting to the circumferential grooves (10, 11, 12, 17, 18, (19), wherein the groove width of the widthwise grooves (13, 14, 15) becomes smaller from the widened width portions (15a) toward the end portions of the widthwise grooves (13, 14, 15).

11. The run-flat tire (1) according to any one of the preceding claims, wherein a negative ratio of the vehicle-installed side, inner than the tire equatorial plain CL, is larger than the negative ratio of the vehicle-installed outer side.

12. The run-flat tire (1) according to any of claims 1-11, wherein a negative ratio of the vehicle-installed side, inner than the tire equatorial plain CL, is smaller than the negative ratio of the vehicle-installed outer side.

**13.** The run-flat tire (1) according to any one of the preceding claims, wherein small land portions partitioned by the circumferential grooves and the widthwise grooves are arranged along the tire circumferential direction, and the small land portions have land portion surfaces corresponding to the tread surface contacting the road surface, land portion side surfaces forming groove wall surface of the widthwise grooves, and land portion inclined surfaces continuous to the land portion surfaces and the land portion side surfaces, where the land portion inclined surfaces have curved surfaces inclined from the tire widthwise outer side toward the inner side, to the tire circumferential direction and the tire width direction, and protruding toward a tire central side in the tire radial direction; the height of the land portion side surfaces, which is the height from the groove bottom surface of the widthwise grooves, decreases along with the inclination of the land portion inclined surfaces; connection portions connecting the land portion inclined surfaces and the land portion surfaces have a round shape such that bended portions protruding toward the tire radial outer side are formed, the connection portions having a round shape extending approximately in accordance with the tire circumferential direction, and adjacent connection portions being in accordance with each other in the tire circumferential direction.

**14.** The run-flat tire (1) according to any one of the preceding claims, wherein the total groove area of the widthwise grooves (13, 14, 15) is larger than the total groove area of the circumferential grooves (10, 11, 12, 17, 18, 19).

## Patentansprüche

**1.** Reifen, umfassend einen Laufflächenabschnitt (2), ein Paar von Seitenwandabschnitten (3), die durchgängig auf beiden Seiten des Laufflächenabschnitts (2) sind, Wulstabschnitte (4), die durchgängig an jedem Seitenwandabschnitt (3) sind, verstärkende Seitenkautschuke (5) und eine Karkasse (6), die aus Lagen von radial angeordneten Cordfäden gebildet ist, die sich torusförmig zwischen dem Paar von Wulstabschnitten (4) erstrecken, wobei:

wenn der Reifen an einer Felge montiert ist und ein Innendruck von 250 kPa oder mehr auf den Reifen ausgeübt wird,

in einem Fall, in dem eine Querschnittsbreite SW des Reifens weniger als 165 mm beträgt, ein Verhältnis der Querschnittsbreite SW zu einem Außendurchmesser OD des Reifens, SW/OD, 0,26 oder weniger ist; und

in einem Fall, in dem die Querschnittsbreite SW des Reifens 165 mm oder mehr beträgt, die Querschnittsbreite SW und der Außendurchmesser OD des Reifens den folgenden Beziehungsausdruck erfüllen:

$$OD \geq 2,135 \times SW + 282,3 \ (mm);$$

eine Reifenradialaußenseite der Karkasse (6) ferner einen Gürtel (8) umfasst, der aus einer oder mehreren Gürtelschichten gebildet ist; und

der Laufflächenabschnitt eine oder mehrere Umfangsrillen (10, 11, 12, 17, 18, 19) aufweist, die sich durchgängig in einer Reifenumfangsrichtung erstrecken; **dadurch gekennzeichnet, dass**

der Reifen ein Notlaufreifen (1) ist; dadurch, dass

die verstärkenden Seitenkautschuke (5) einen sichelförmigen Querschnitt umfassen, der an den Seitenwandabschnitten angeordnet ist; dadurch, dass

ein Beziehungsausdruck

$$0,5 \leq WG/WB \leq 0,8,$$

erfüllt ist, wobei WB eine halbe Breite in der Reifenbreitenrichtung einer Gürtelschicht mit einer maximalen Breite in Reifenbreitenrichtung der einen oder mehreren Gürtelschichten in einem Reifenbreitenquerschnitt in einem Referenzzustand darstellt, in dem der Reifen auf einer Felge montiert ist und mit einem vorbestimmten Innendruck gefüllt ist, ohne dass eine Last darauf aufgebracht ist, und WG einen Reifenbreitenabstand von einem Breitenrichtungsende der Gürtelschicht in der Reifenbreitenrichtung zu einer Reifenbreitenmittelposition einer Umfangsrille in der äußersten Seite in der Reifenbreitenrichtung der einen oder mehreren Umfangsrillen darstellt; und dadurch, dass

der 50%-Dehnungsmodul der verstärkenden Seitenkautschuke (5) 1,5 bis 6,0 MPa beträgt.

2. Notlaufreifen nach Anspruch 1, wobei:

wenn H1 (mm) eine maximale radiale Reifenlänge der verstärkenden Seitenkautschuke (5) im Reifenbreitenquerschnitt im Referenzzustand ist, ein Beziehungsausdruck:

$$10(mm) \leq (SW/OD) \times H1 \leq 20(mm)$$

erfüllt ist.

3. Notlaufreifen nach Anspruch 1 oder 2, wobei:

die Wulstabschnitte (4) Wulstkerne (4a) aufweisen, die Wulstkerne (4a) ferner Wulstfüller (7) auf einer Reifenradialaußenseite aufweisen und
ein Beziehungsausdruck:

$$1{,}8 \leq H1/H2 \leq 3{,}5$$

erfüllt ist, wobei H2 eine Länge eines geraden Liniensegments ist, das einen äußersten Punkt in Reifenradialrichtung des Wulstfüllers und einen äußersten Punkt in Reifenradialrichtung des Wulstkerns (4a) im Reifenbreitenquerschnitt im Referenzzustand verbindet.

4. Notlaufreifen nach einem der Ansprüche 1 bis 3, wobei:
eine maximale Dicke der verstärkenden Seitenkautschuke (5), gemessen in einer Richtung senkrecht zur Karkasse (6), 6 mm oder weniger beträgt.

5. Notlaufreifen nach einem der Ansprüche 1 bis 4, wobei:

die Wulstabschnitte (4) Wulstkerne (4a) aufweisen,
die Karkasse (6) einen Karkassenhauptkörper (6a) und einen gefalteten Karkassenabschnitt (6b) aufweist, wobei der Karkassenhauptkörper (6a) an dem Paar Wulstkerne (4a) befestigt ist, wobei sich der gefaltete Karkassenabschnitt (6b) von dem Karkassenhauptkörper (6a) erstreckt und gebildet wird, indem ein Umfang der Wulstkerne (4a) von einer Reifenbreiteninnenseite zu einer Reifenbreitenaußenseite gefaltet wird, und ein gefaltetes Ende (6c) des gefalteten Abschnitts (6b) auf einer radialen Reifenradialseite weiter nach innen als eine Reifenmaximalbreitenposition angeordnet ist.

6. Notlaufreifen (1) nach einem der vorhergehenden Ansprüche, wobei die Wulstkerne (4a) in eine Vielzahl getrennt sind und die Karkasse (6) von der Vielzahl von getrennten Wulstkernelementen umgeben ist.

7. Notlaufreifen (1) nach einem der vorhergehenden Ansprüche, wobei die Karkasse (6) ein Paar geteilter Karkassen umfasst, von denen ein Reifenbreitenmittelbereich entnommen ist.

8. Notlaufreifen (1) nach einem der vorhergehenden Ansprüche, wobei die Umfangsrillen (10, 11, 12) 2 mm breit oder breiter sind.

9. Notlaufreifen (1) nach einem der vorhergehenden Ansprüche, wobei eine Vielzahl von Umfangsrillen (10, 11, 12, 17, 18, 19) ausgebildet sind und in den Umfangsrillen (10, 11, 12 17, 18, 19) schmale Rillen (16) ausgebildet sind, die die Umfangsrillen (10, 11, 12, 17, 18, 19) verbinden und innerhalb der Stegabschnitte enden, und wobei der Winkel der schmalen Rillen in Bezug auf die Reifenbreitenrichtung 20° oder weniger beträgt.

10. Notlaufreifen (1) nach einem der vorhergehenden Ansprüche, wobei in Breitenrichtung verlaufende Rillen (13, 14, 15), die an Umfangsstegabschnitten ausgebildet sind, verbreiterte Breitenabschnitten (15a) aufweisen, wobei die Rillenbreite größer als die Rillenbreite der Abschnitte ist, die mit den Umfangsrillen (10, 11, 12, 17, 18, 19) verbunden sind, wobei die Rillenbreite der Breitenrillen (13, 14, 15) von den verbreiterten Breitenabschnitten (15a) zu den Endabschnitten der Breitenrillen (13, 14, 15) hin abnimmt.

**11.** Notlaufreifen (1) nach einem der vorhergehenden Ansprüche, wobei ein negatives Verhältnis der fahrzeuginstallierten Seite, die weiter innen als die Reifenäquatorialebene CL liegt, größer ist als das negative Verhältnis der fahrzeuginstallierten Außenseite.

**12.** Notlaufreifen (1) nach einem der Ansprüche 1-11,
wobei ein negatives Verhältnis der fahrzeuginstallierten Seite, die weiter innen als die Reifenäquatorialebene CL liegt, kleiner ist als das negative Verhältnis der fahrzeuginstallierten Außenseite.

**13.** Notlaufreifen (1) nach einem der vorhergehenden Ansprüche,
wobei kleine Stegabschnitte, die durch die Umfangsrillen und die Breitenrillen unterteilt sind, entlang der Reifenumfangsrichtung angeordnet sind und die kleinen Stegabschnitte Stegabschnittoberflächen, die der die Straßenoberfläche berührenden Laufflächenoberfläche entsprechen, wobei Stegabschnittseitenflächen eine Rillenwandfläche der Breitenrillen bilden, und geneigte Flächenbereiche der Stegabschnitte, die mit den Stegabschnittoberflächen und den Stegabschnittseitenflächen durchgängig sind, aufweisen, wobei die geneigten Flächenbereiche der Stegabschnitte gekrümmte Flächen aufweisen, die von der Reifenbreitenaußenseite zur Innenseite, zur Reifenumfangsrichtung und zur Reifenbreitenrichtung geneigt sind und in Reifenradialrichtung zu einer Reifenmittelseite vorragen; die Höhe der Stegabschnittseitenflächen, die die Höhe von der Rillenunterfläche der Breitenrillen ist, mit der Neigung der geneigten Flächen des Stegabschnitts abnimmt; Verbindungsabschnitte, die die geneigten Flächen des Stegabschnitts und die Stegabschnittoberflächen verbinden, eine runde Form aufweisen, sodass gebogene Abschnitte ausgebildet sind, die zur Reifenradialaußenseite vorstehen, wobei die Verbindungsabschnitte eine runde Form aufweisen, die sich ungefähr entsprechend der Reifenumfangsrichtung erstreckt, und benachbarte Verbindungsabschnitte einander in der Reifenumfangsrichtung entsprechen.

**14.** Notlaufreifen (1) nach einem der vorhergehenden Ansprüche,
wobei die Gesamtrillenfläche der Breitenrillen (13, 14, 15) größer ist als die Gesamtrillenfläche der Umfangsrillen (10, 11, 12, 17, 18, 19).

**Revendications**

**1.** Pneu comprenant une partie formant bande de roulement (2), une paire de parties formant flancs (3) continues des deux côtés de la partie formant bande de roulement (2), des parties formant talon (4) continues sur chaque partie formant flanc (3), des caoutchoucs de renforcement latéraux (5), et une carcasse (6) formée de plis de cordes agencées radialement s'étendant de façon toroïdale entre la paire de parties formant talon (4), dans lequel :

lorsque le pneu est fixé sur une jante et qu'une pression interne supérieure à égale à 250 kPa est appliquée au pneu,
dans le cas où une largeur de section SW du pneu est inférieure à 165 mm, un rapport de la largeur de section SW à un diamètre externe OD du pneu, SW/OD, est inférieur ou égal à 0,26 ; et
dans le cas où la largeur de section SW du pneu est supérieure ou égale à 165 mm, la largeur de section SW et le diamètre externe OD du pneu satisfont une expression relationnelle

$$OD \geq 2{,}135 \times SW + 282{,}33 \, (mm);$$

un côté externe radial de pneu de la carcasse (6) comprend en outre une ceinture (8) formée d'une ou plusieurs couches de ceinture ; et
la partie formant bande de roulement présente une ou plusieurs rainures circonférentielles (10, 11, 12, 17, 18, 19) s'étendant en continu dans une direction circonférentielle du pneu ; **caractérisé en ce que**
le pneu est un pneu à affaissement limité (1) ; **en ce que**
les caoutchoucs de renforcement latéraux (5) comprennent une section transversale en forme de croissant disposée sur les parties formant flancs ; **en ce que**
une expression relationnelle

$$0{,}5 \leq WG/WB \leq 0{,}8,$$

est satisfaite, où WB représente une demi-largeur dans la direction de largeur de pneu d'une couche de ceinture de largeur maximale dans la direction de largeur du pneu parmi les une ou plusieurs couches de ceinture dans une section transversale dans le sens de la largeur du pneu dans un état de référence où le pneu est fixé sur une jante et rempli avec une pression interne prédéterminé sans qu'une charge ne lui soit appliquée, et WG représente une distance dans le sens de la largeur du pneu depuis une extrémité dans le sens de la largeur du pneu de la couche de ceinture de largeur maximale dans la direction de largeur du pneu jusqu'à une position centrale dans le sens de la largeur du pneu d'une rainure circonférentielle sur le côté situé le plus à l'extérieur dans le sens de la largeur du pneu parmi les une ou plusieurs rainures circonférentielles ; et **en ce que** le module d'élasticité à 50 % des caoutchoucs de renforcement latéraux (5) va de 1,5 à 6,0 MPa.

2. Pneu à affaissement limité selon la revendication 1, dans lequel :

   lorsque H1 (mm) est une longueur maximale radiale de pneu des caoutchoucs de renforcement latéraux (5) dans la section transversale dans le sens de la largeur du pneu dans l'état de référence, une expression relationnelle

   $$10(mm) \le (SW/OD) \times H1 \le 20(mm)$$

   est satisfaite.

3. Pneu à affaissement limité (1) selon la revendication 1 ou 2, dans lequel :

   les parties formant talon (4) comportent des tringles de talon (4a), les tringles de talon (4a) comportent en outre des charges de talon (7) sur un côté externe radial du pneu, et
   une expression relationnelle

   $$1,8 \le H1/H2 \le 3,5$$

   est satisfaite, où H2 est la longueur d'un segment de droite reliant un point radial de pneu situé le plus à l'extérieur de la charge de talon et un point radial de pneu situé le plus à l'extérieur de la tringle de talon (4a) dans la section transversale dans le sens de la largeur du pneu dans l'état de référence.

4. Pneu à affaissement limité (1) selon l'une quelconque des revendications 1 à 3, dans lequel :
   une épaisseur maximale des caoutchoucs de renforcement latéraux (5) mesurée dans une direction perpendiculaire à la carcasse (6) est inférieure ou égale à 6 mm.

5. Pneu à affaissement limité (1) selon l'une quelconque des revendications 1 à 4, dans lequel :

   les parties formant talon (4) comportent des tringles de talon (4a),
   la carcasse (6) comporte un corps principal de carcasse (6a) et une partie repliée de carcasse (6b), le corps principal de carcasse (6a) étant fixé à la paire de tringles de talon (4a), la partie repliée de carcasse (6b) s'étendant à partir du corps principal de carcasse (6a) et étant formée en repliant une circonférence des tringles de talon (4a) depuis un côté interne dans le sens de la largeur du pneu vers un côté externe dans le sens de la largeur du pneu, et
   une extrémité repliée (6c) de la partie repliée (6b) est située sur un côté radial du pneu situé plus à l'intérieur qu'une position de largeur maximale du pneu.

6. Pneu à affaissement limité (1) selon l'une quelconque des revendications précédentes, dans lequel les tringles de talon (4a) sont séparées en une pluralité, et la carcasse (6) est entourée par la pluralité d'éléments séparés formant tringle de talon.

7. Pneu à affaissement limité (1) selon l'une quelconque des revendications précédentes, la carcasse (6) comprenant une paire de carcasses divisées dont une région centrale dans le sens de la largeur du pneu est extraite.

8. Pneu à affaissement limité (1) selon l'une quelconque des revendications précédentes, dans lequel les rainures circonférentielles (10, 11, 12) ont une largeur supérieure ou égale à 2 mm.

9.  Pneu à affaissement limité (1) selon l'une quelconque des revendications précédentes, dans lequel sont formées une pluralité de rainures circonférentielles (10, 11, 12, 17, 18, 19), et dans les rainures circonférentielles (10, 11, 12, 17, 18, 19) sont formées des rainures étroites (16) reliées aux rainures circonférentielles (10, 11, 12, 17, 18, 19) et se terminant dans les parties formant méplat, et l'angle formé par les rainures étroites par rapport à la direction de largeur du pneu est inférieur ou égal à 20°.

10. Pneu à affaissement limité (1) selon l'une quelconque des revendications précédentes, dans lequel des rainures transversales (13, 14, 15) formées sur des parties formant méplat circonférentielles présentent des parties de largeur élargies (15a), où la largeur de rainure est supérieure à la largeur de rainure des parties reliées aux rainures circonférentielles (10, 11, 12, 17, 18, 19),
    dans lequel la largeur de rainure des rainures transversales (13, 14, 15) diminue depuis les parties de largeur élargies (15a) vers les parties formant extrémité des rainures transversales (13, 14, 15).

11. Pneu à affaissement limité (1) selon l'une quelconque des revendications précédentes, dans lequel un rapport négatif du côté monté sur véhicule, situé plus à l'intérieur que le plan équatorial CL du pneu, est supérieur au rapport négatif du côté externe monté sur véhicule.

12. Pneu à affaissement limité (1) selon l'une quelconque des revendications 1 à 11, dans lequel un rapport négatif du côté monté sur véhicule, situé plus à l'intérieur que le plan équatorial CL du pneu, est inférieur au rapport négatif du côté externe monté sur véhicule.

13. Pneu à affaissement limité (1) selon l'une quelconque des revendications précédentes,
    dans lequel des petites parties formant méplat cloisonnées par les rainures circonférentielles et les rainures transversales sont agencées dans la direction circonférentielle du pneu, et les petites parties formant méplats comportent des surfaces de partie formant méplat correspondant à la surface de bande de roulement en contact avec le revêtement routier, des surfaces latérales de partie formant méplat formant une surface de paroi de rainure des rainures transversales, et des surfaces inclinées de partie formant méplat prolongeant les surfaces de partie formant méplat et les surfaces latérales de partie formant méplat, où les surfaces inclinées de partie formant méplat présentent des surfaces incurvées inclinées depuis le côté externe dans le sens de la largeur du pneu vers le côté interne, dans la direction circonférentielle du pneu et dans la direction de largeur du pneu, et faisant saillie vers un côté central du pneu dans la direction radiale du pneu ; la hauteur des surfaces latérales de partie formant méplat, qui est la hauteur depuis la surface de fond de rainure des rainures transversales, diminue suivant l'inclinaison des surfaces inclinées de partie formant méplat ; des parties de liaison reliant les surfaces inclinées de partie formant méplat et les surfaces de partie formant méplat présentent une forme circulaire de sorte que des parties courbes faisant saillie vers le côté externe radial du pneu sont formées, les parties de liaison présentant une forme circulaire s'étendant approximativement suivant la direction circonférentielle du pneu, et des parties de liaison adjacentes correspondant l'une avec l'autre dans la direction circonférentielle du pneu.

14. Pneu à affaissement limité (1) selon l'une quelconque des revendications précédentes, dans lequel la surface de rainure totale des rainures transversales (13, 14, 15) est supérieure à la surface de rainure totale des rainures circonférentielles (10, 11, 12, 17, 18, 19).

# FIG. 1

FIG. 2

EP 3 202 596 B1

# FIG. 3

TE         17        CL  18       19        TE

20   20   20   20   20   20

EP 3 202 596 B1

# FIG. 4

CL
WB
WG
11
10
2a
9
}8

# FIG. 5A

CL
Small WG/WB
Large remaining contact width

# FIG. 5B

CL
Large WG/WB
Small remaining contact width

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012176476 A1
- EP 2781372 A
- WO 2015182153 A